(19) Europäisches Patentamt
European Patent Office
Office européen des brevets

(11) Numéro de publication : **0 465 425 B1**

(12) # FASCICULE DE BREVET EUROPEEN

(45) Date de publication du fascicule du brevet :
**06.12.95 Bulletin 95/49**

(51) Int. Cl.[6] : **G02B 6/12**, G02B 6/28, G02F 2/00, H04B 10/00

(21) Numéro de dépôt : **91810506.5**

(22) Date de dépôt : **28.06.91**

(54) **Dispositif optique intégré séparateur de polarisation, utilisation de ce dispositif et système optique intégré interférométrique obtenu.**

(30) Priorité : **06.07.90 CH 2338/90**

(43) Date de publication de la demande :
**08.01.92 Bulletin 92/02**

(45) Mention de la délivrance du brevet :
**06.12.95 Bulletin 95/49**

(84) Etats contractants désignés :
**CH DE FR GB IT LI**

(56) Documents cités :
**EP-A- 0 308 602
EP-A- 0 361 152
APPLIED OPTICS, vol. 29, no. 11, 1 juin 1989, pages 2057-2060, New York, US; J.L. JACKEL et al.: "Voltage tunable LiNbO3 wavelength filters"
ELECTRONICS LETTERS, vol. 24, no. 8, 14 avril 1988, pages 478-479, Stevenage, Herts, GB; S.H. SHIPLEY : "All-single-mode-fibre interferometric polarisation beam splitter"**

(56) Documents cités :
**ELECTRONICS LETTERS, vol. 26, no. 14, 5 juillet 1990, pages 995-997, Stevenage, Herts, GB; C. DUCHET et al. : "New TE/TM polarisation splitter made in Ti : LiNb03 using X-cut and Z-axis propagation"**

(73) Titulaire : **CENTRE SUISSE D'ELECTRONIQUE ET DE MICROTECHNIQUE S.A.
Maladière 71
CH-2000 Neuchâtel 7 (CH)**

(72) Inventeur : **Parriaux, Olivier
Cité-Derrière 3
CH-1005 Lausanne (CH)**
Inventeur : **Voirin, Guy
Rue des Brévards 6
CH-2000 Neuchâtel (CH)**

(74) Mandataire : **Brulliard, Joel
c/o CENTRE SUISSE D'ELECTRONIQUE ET DE MICROTECHNIQUE S.A.
Maladière 71
CH-2007 Neuchâtel (CH)**

## Description

La présente invention concerne un dispositif optique intégré séparateur de polarisation. Elle concerne également les utilisations du dispositif selon l'invention et les systèmes optiques intégrés interférométriques ainsi obtenus.

L'article "New TE/TM polarisation splitter made in Ti : LiNbO$_3$, using X-cut and Z-axis propagation" paru dans la revue Electronics Letters du 5 juillet 1990, volume 26, No 14, pages 995-997, décrit un dispositif optique intégré séparateur de polarisation comportant un diviseur de puissance suivi par une section interférométrique et par un coupleur 3 dB. La section interférométrique comprend deux guides d'onde parallèles et identiques ainsi que des électrodes. Ces électrodes permettent de soumettre lesdits deux guides d'onde à des champs électriques qui influencent différemment les modes TE et TM propagés, la séparation de ces modes étant faite par le coupleur 3 dB. L'inconvénient d'une telle solution réside dans le fait que la section interférmométrique est un élément non passif.

L'article "Voltage tunable LiNbO$_3$ wavelength filters" paru dans la revue Applied Optics du 1er juin 1989, volume 28, No 11, pages 2057-2060, décrit une section interférométrique comportant deux guides d'onde ayant des largeurs différentes. Il s'ensuit la création d'un déphasage dépendant de la longueur d'onde du signal propagé. Un tel dispositif permet le filtrage selon la longueur d'onde mais ne permet pas de résoudre le problème de séparation de différents modes d'un signal de fréquence donnée.

Le document "Four-port integrated optic polarization splitter," de Y. Shani et al., Applied Optics, 20 january 1990, Vol. 29, No. 3, pp. 337-339, montre un dispositif optique intégré séparateur de polarisation défini à partir d'un interféromètre du type Mach-Zehnder. Le dispositif décrit permet la séparation spatiale des polarisations TE et TM d'une onde optique incidente. Le dispositif comporte un interféromètre du type Mach-Zehnder dont les deux branches ont une différence de longueur $\Delta$L. De plus sur l'une des branches est disposée une couche de nitrure de silicium (Si$_3$N$_4$) de longueur 1, permettant l'introduction d'une biréfringence dans la branche. Ladite différence de longueur $\Delta$L entre les deux branches compense, pour l'une des polarisations, le chemin optique supplémentaire introduit par ladite couche.

Un inconvénient du dispositif décrit est que la réalisation de la couche en Si$_3$N$_4$ nécessite une étape spécifique.

Un autre inconvénient du dispositif est le fait qu'il nécessite un masque spécifique pour la réalisation de la couche en Si$_3$N$_4$.

Un autre inconvénient est l'introduction de pertes dans l'un des guides d'onde du fait de la présence de ladite couche.

Aussi un objet de la présente invention est un dispositif optique intégré séparateur de polarisation ne présentant pas les inconvénients cités ci-dessus.

Un autre objet est l'utilisation du dispositif optique intégré séparateur de polarisation dans un système optique intégré interférométrique à diversité de polarisation.

Un autre objet est l'utilisation du dispositif optique intégré séparateur de polarisation selon l'invention dans un système optique intégré interférométrique à diversité de phase et de polarisation.

Un autre objet est un système optique intégré interférométrique à diversité de polarisation incorporant un dispositif optique intégré séparateur de polarisation selon l'invention.

Un autre objet est un système optique intégré interférométrique à diversité de phase et de polarisation incorporant un dispositif optique intégré séparateur de polarisation selon l'invention.

Les caractéristiques de l'invention sont définies dans les revendications.

Un avantage de l'invention est que la biréfringence introduite dans les guides d'onde ne nécessite aucun dépôt de couche spécifique.

Un autre avantage est que les pertes de propagation sont identiques dans les deux branches.

Un autre avantage est que les guides d'onde ont des longueurs identiques, ce qui permet une réalisation plus simple des masques requis pour leur fabrication.

Un autre avantage est de permettre la définition de la biréfringence introduite dans les guides d'ondes par la seule définition des paramètres géométriques desdits guides.

D'autres objets, caractéristiques et avantages de la présente invention apparaltront plus clairement à la lecture de la description suivante d'un exemple de réalisation, ladite description étant faite à titre purement illustratif et en relation avec les dessins joints dans lesquels:

la figure 1      montre un exemple de réalisation connu de l'art antérieur;

la figure 2      montre un exemple de réalisation selon les caractéristiques de la présente invention;

la figure 3      montre un premier exemple d'utilisation du dispositif selon l'invention et

la figure 4      montre un second exemple d'utilisation du dispositif selon l'invention.

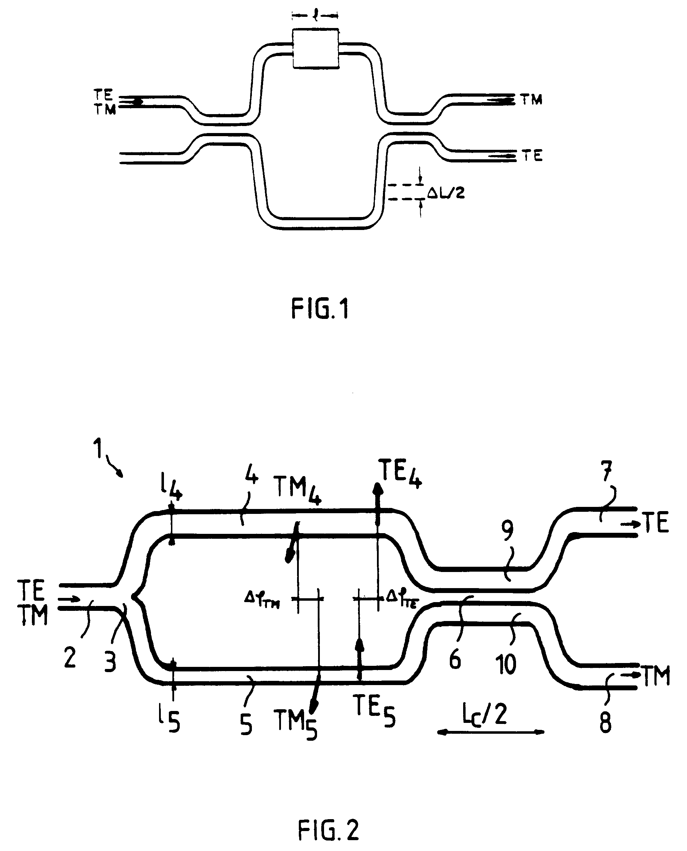

L'exemple de réalisation de la figure 1 représente le dispositif optique intégré séparateur de polarisation de l'art antérieur mentionné dans l'introduction de la présente description. Ce dispositif est un interféromètre du type Mach-Zehnder dont les deux branches ont des longueurs différentes $\Delta L$. Sur l'une des branches est disposée une couche en $Si_3N_4$ de longueur 1, permettant l'introduction d'une biréfringence dans le guide d'onde constituant ladite branches.

L'exemple de réalisation, représenté à la figure 2, permet d'exposer les différentes caractéristiques de l'invention.

Dans une réalisation préférée le dispositif optique intégré séparateur de polarisation 1 comprend:
- un guide d'entrée 2 dans lequel est injectée une onde incidente dont on souhaite séparer les modes de polarisation TE et TM;
- des premiers moyens 3 pour diviser ladite onde incidente en deux ondes d'amplitude égale, lesquelles se propagent dans une première 4 et une seconde 5 branches de largeur $l_4$ et $l_5$, respectivement; et
- des seconds moyens 6, pour répartir également dans une première 7 et une seconde 8 branches de sortie lesdites deux ondes d'amplitude égale, constitués, par exemple, d'un coupleur optique du type 3 dB, lequel se compose de deux guides d'onde 9, 10 de longueur égale à la moitié de la longueur de couplage $L_c$.

Lesdites première et seconde branches ont des largeurs $l_4$ et $l_5$ différentes et cette différence de largeur affecte différemment les modes TE et TM. Ainsi dans chaque branche l'indice effectif ($n_{eTE4}$, $n_{eTE5}$) du mode TE est différent de l'indice effectif ($n_{eTM4}$, $n_{eTM5}$) du mode TM et l'indice effectif du même mode est différent d'une branche à l'autre. En d'autres termes, la biréfringence d'un guide, soit $n_{eTE4}$- $n_{eTM4}$ ou $n_{eTE5}$- $n_{eTM5}$, est différente de la biréfringence de l'autre guide ou encore, le déphasage entre les modes TE et TM d'un guide est différent du déphasage de l'autre guide.

Les largeurs des branches sont définies de manière que les modes TE, respectivement les modes TM, qui se propagent dans la première et la seconde branches soient déphasées de $\Delta\rho_{TE} = +$ ou $- \pi/2$, respectivement de $\Delta\rho_{TM} = -$ ou $+ \pi/2$.

Les déphasages d'un guide à l'autre entre les modes TE ($\Delta\rho_{TE}$) et entre les modes TM ($\Delta\rho_{TM}$) peuvent être exprimés comme suit:

$$\Delta\rho_{TE} = k_0.(n_{eTE4} - n_{eTE5}).L = k_0 \Delta n_{eTE}.L = + \text{ ou } - \Pi/2 + 2i\Pi$$
$$\Delta\rho_{TM} = k_0.(n_{eTM4} - n_{eTM5}).L = k_0 \Delta n_{eTM}.L = - \text{ ou } + \Pi/2 + 2j\Pi,$$

où $k_0 = 2\Pi/\lambda$, L est la longueur des branches et i et j sont des nombres entiers quelconques.

La différence entre les déphasages $\Delta\rho_{TE}$ et $\Delta\rho_{TM}$ entre les deux polarisations TE et TM est donnée par l'expression suivante:

$$\Delta\rho_{TE} - \Delta\rho_{TM} = k_0.(\Delta n_{eTE} - \Delta n_{eTM}).L = + \text{ ou } - \Pi + 2\Pi(i - j).$$

La plus faible longueur $L_0$ des branches est donnée lorsque i-j = 0 soit:

$$1/L_0 = 2.(1/L_{b4} - 1/L_{b5}),$$

sachant que $L_{b4}$ et $L_{b5}$ sont les longueurs de battement des modes TE et TM pour la première et la seconde branches, respectivement, et que $L_{bk} = \lambda/(n_{eTEk}- n_{eTMk})$, k représentant la référence (4 ou 5) du guide considéré.

On montre que la valeur de la longueur de battement $L_b$ entre un mode TE et un mode TM dépend fortement de la largeur 1 des guides, selon une fonction monotone décroissante, et faiblement de la température, pour des guides obtenus dans les mêmes conditions d'échange ionique.

La longueur de battement, définie par l'expression $L_b = \lambda/(n_{eTE}- n_{eTM})$, a une valeur $L_b > 8,9$ mm dans un guide de largeur égale à 3 $\mu$m et une valeur $L_b < 0,5$ mm dans un guide planaire, pour une longueur d'onde $\lambda$ = 633 nm.

Conformément à une réalisation préférée donnée à titre d'exemple:
- les guides d'onde intégrés sont des guides de forte biréfringence réalisés par échange ionique $K^+$-$Na^+$ dans un verre du type BK7 (cf. J.-E. Gortych et al., "Fabrication of planar optical waveguides by $K^+$ ion exchange in BK7 glass," Optics Letters / Vol. 11, No. 2 / February 1986, pp. 100 - 102),
- la différence de largeur $\Delta l = l_4$- $l_5$ entre la première et la seconde branche est de l'ordre de 2 $\mu$m et
- les longueurs de battement $L_{b4}$ et $L_{b5}$ des guides respectifs dépendent de la largeur et ont comme valeurs, respectivement, 4,4 mm et 11,1 mm à une longueur d'onde de $\lambda$ = 633 nm,

soit des première et seconde branches de longueur $L_0$ d'environ 3,64 mm.

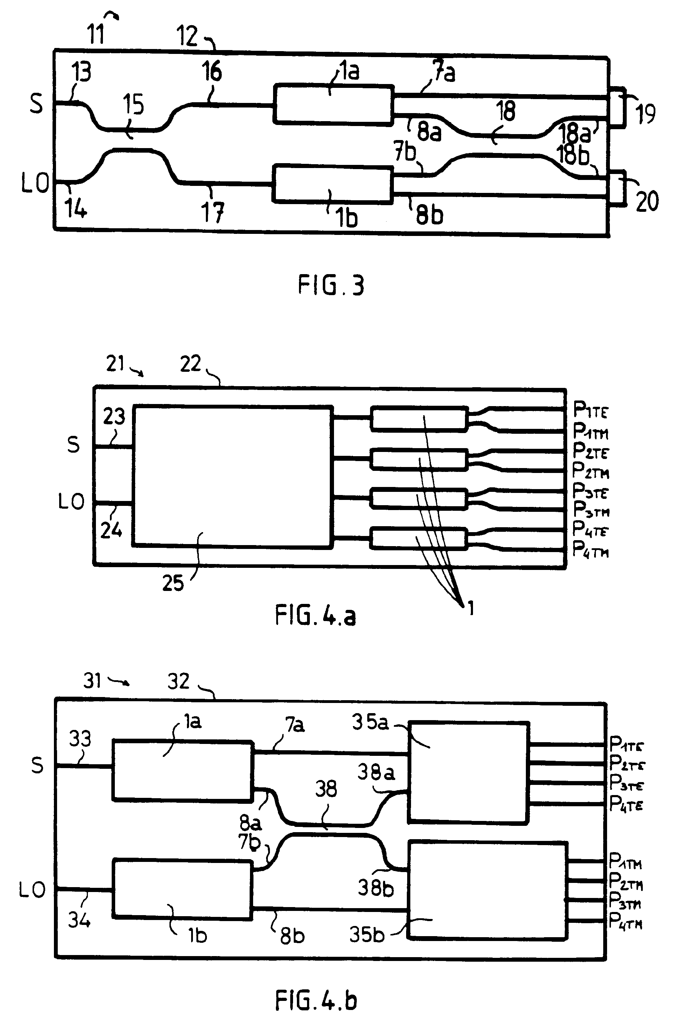

Un premier exemple d'utilisation du dispositif selon l'invention, est son agencement dans un système interférométrique à diversité de polarisation représenté à la figure 3. Un système à diversité de polarisation fournit un signal d'interférence quels que soient les deux états de polarisation des signaux d'entrée. En d'autres termes, un système interférométrique à diversité de polarisation permet de faire interférer un signal optique d'entrée S à l'état de polarisation inconnu ou fluctuant avec un signal optique de référence LO à l'état de polarisation connu et stable. Un tel système évite l'extinction du signal d'interférence entre deux ondes lorsque leurs états de polarisation diffèrent.

Le principe des systèmes interférométriques à diversité de polarisation est décrit dans le document "Polarisation-insensitive coherent receiver using a double balanced optical hybrid system", L.D. Tzeng et al., Electronics Letters, 1987, Vol. 23, No. 22, pp. 1195-1196. La configuration présentée schématiquement par L.D. Tzeng et al., utilise des éléments optiques classiques non intégrés.

Le système optique intégré interférométrique à diversité de polarisation 11 de l'invention comprend les éléments suivants intégrés sur un substrat 12:

- un premier 13 et un second 14 guides d'onde d'entrée dans lesquels sont injectés, respectivement, ledit signal optique d'entrée S et ledit signal optique de référence LO;
- un coupleur optique 15 du type 3 dB, indépendant de la polarisation, dont les deux entrées sont reliées, respectivement, auxdits premier et second guides d'onde d'entrée et dont les signaux optiques de sortie ont des puissances optiques égales;
- un premier dispositif optique intégré séparateur de polarisation 1a tel que décrit précédemment, disposant d'une entrée reliée à l'une 16 des deux sorties dudit coupleur du type 3 dB, d'une première 7a et d'une seconde 8a branches de sortie;
- un second dispositif optique intégré séparateur de polarisation 1b tel que décrit précédemment, disposant d'une entrée reliée à l'autre 17 sortie dudit coupleur du type 3 dB, d'une première 7b et d'une seconde 8b branches de sortie;
- un coupleur directionnel 18 de longueur $L_c$, indépendant de la polarisation, dont la première et la seconde entrée sont reliées, respectivement, à ladite seconde branche de sortie 8a dudit premier dispositif optique intégré séparateur de polarisation et à ladite première branche de sortie 7b dudit second dispositif, lequel coupleur effectue un transfert des signaux optiques de la première entrée dans une seconde branche de sortie 18b, respectivement de la seconde entrée dans une première branche de sortie 18a dudit coupleur directionnel;
- un premier détecteur optique 19 disposé face à ladite première branche de sortie 7a dudit premier dispositif optique intégré séparateur de polarisation et à ladite première branche de sortie 18a dudit coupleur directionnel et
- un second détecteur optique 20 disposé face à ladite seconde branche de sortie 18b dudit coupleur directionnel et à ladite seconde branche de sortie 8b dudit second dispositif.

Un avantage important du système optique intégré interférométrique de l'invention est qu'il ne nécessite pas l'utilisation d'un contrôleur de polarisation tel que généralement utilisé dans les sytèmes de télécommunication en optique cohérente.

La polarisation du signal optique de référence est orientée selon un angle de 45° par rapport aux axes de biréfringence dudit second guide d'entrée de manière que les puissances optiques selon lesdits axes de biréfringence soient égales.

Un second exemple d'utilisation du dispositif selon l'invention, est son agencement, selon deux configurations, dans un système interférométrique à diversité de phase et de polarisation représenté aux figures 4.a et 4.b. Un système à diversité de phase et de polarisation permet, d'une part, de suivre une dérive de phase entre deux signaux de fréquences optiques différentes et, d'autre part, de fournir un signal d'interférence quels que soient les deux états de polarisation desdits signaux d'entrée.

Ledit système interférométrique à diversité de phase et de polarisation permet de faire interférer un signal optique d'entrée S à l'état de polarisation inconnu ou fluctuant avec un signal optique de référence LO à l'état de polarisation connu et stable et non asservi en phase sur le signal. De plus, ledit système interférométrique à diversité de phase et de polarisation permet également la délivrance de quatre signaux de sortie en quadrature pour chacun des modes de polarisation TE et TM.

Dans une première configuration (fig. 4.a), le système optique interférométrique à diversité de phase et de polarisation 21 de l'invention comprend les éléments suivants intégrés sur un substrat 22:

- un premier 23 et un second 24 guides d'entrée dans lesquels sont injectés, respectivement, ledit signal optique d'entrée S et ledit signal optique de référence LO;
- un élément optique interférométrique 25 à deux entrées et N sorties, lesdites entrées étant reliées auxdits premier et second guides d'entrée, délivrant sur ses N sorties des fonctions décalées de $2\Pi/N$ du déphasage entre les signaux appliqués sur ses deux entrées; et
- N dispositifs optiques intégrés séparateurs de polarisation 1 tels que décrits précédemment, l'entrée de chacun d'eux étant reliée à l'une des N sorties dudit élément optique interférométrique, délivrant, pour chacun des modes de polarisation TE et TM, N signaux de sorties ($P_{1TE} - P_{NTE}$, $P_{1TM} - P_{NTM}$) qui sont, lorsque N = 3, trois signaux optiques déphasés de 120° ou, lorsque N = 4, quatre signaux optiques en quadrature.

Un élément optique interférométrique à deux entrées et trois sorties (N = 3), est décrit par R. Schneider et al., ECOC'87, Helsinki, pp. 5-8.

Un élément optique interférométrique à deux entrées et quatre sorties (N = 4), est décrit par Th. Niemeier et al., Optics Letters 1986, Vol. 11, pp. 677-679.

Dans une seconde configuration (fig. 4.b), le système optique interférométrique de phase et de polarisation 31 de l'invention comprend les éléments suivants intégrés sur un substrat 32:

- un premier 33 et un second 34 guides d'entrée dans lesquels sont injectés, respectivement, ledit signal optique d'entrée S et ledit signal optique de référence LO;
- un premier dispositif optique intégré séparateur de polarisation 1a tel que décrit précédemment, dont l'entrée est reliée audit premier guide d'entrée dans lequel est injectée ledit signal optique d'entrée S;
- un second dispositif optique intégré séparateur de polarisation 1b tel que décrit précédemment, dont l'entrée est reliée audit second guide d'entrée dans lequel est injectée ledit signal optique de référence LO;
- un coupleur directionnel 38, de longueur $L_c$, indépendant de la polarisation, dont la première et la seconde entrées sont reliées, respectivement, à ladite seconde branche de sortie 8a dudit premier dispositif optique intégré séparateur de polarisation et à ladite première branche de sortie 7b dudit second dispositif, lequel coupleur effectue un transfert des signaux optiques de la première entrée dans une seconde branche de sortie 38b, respectivement de la seconde entrée dans une première branche de sortie 38a dudit coupleur directionnel;
- un premier élément optique interférométrique 35a à deux entrées et N sorties, lesdites entrées étant reliées, respectivement, à ladite première branche de sortie 7a dudit premier dispositif optique intégré séparateur de polarisation et à ladite première branche de sortie 38a dudit coupleur directionnel, et dont les N sorties ($P_{1TE}$ - $P_{NTE}$) délivrent, pour le mode de polarisation TE, lorsque N = 3, trois signaux optiques déphasés de 120° et, lorsque N = 4, quatre signaux optiques en quadrature; et
- un second élément optique interférométrique 35b à deux entrées et N sorties, lesdites entrées étant reliées, respectivement, à ladite seconde branche de sortie 38b dudit coupleur directionnel et à ladite seconde branche de sortie 8b dudit second dispositif, et dont les N sorties ($P_{1TM}$ - $P_{NTM}$) délivrent, pour le mode de polarisation TM, lorsque N = 3, trois signaux optiques déphasés de 120° et, lorsque N = 4, quatre signaux optiques en quadrature.

Dans la première configuration, seul peut être utilisé un élément optique interférométrique ayant comme caractéristique d'être indépendant de l'état de polarisation des signaux à ses deux entrées. C'est à dire qu'un tel dispositif satisfait la condition de phase relative pour les deux polarisations TE et TM d'entrée simultanément, d'où l'utilisation d'un seul élément optique interférométrique commun aux deux polarisations.

Dans la seconde configuration, chacun des éléments optiques interférométriques est dépendant de l'état de polarisation des signaux à ses deux entrées. En d'autre termes, la condition de déphasage relatif de 120° (N = 3) ou la condition de quadrature (N = 4), n'est réalisée que pour l'une des polarisations TE ou TM, d'où l'utilisation de deux éléments optiques interférométriques distincts.


**Revendications**

1.  Dispositif optique intégré séparateur de polarisation (1) comprenant les éléments suivants intégrés sur un substrat :
    - un guide d'onde d'entrée (2) dans lequel est destinée à être injectée une onde incidente ayant deux modes de polarisation TE et TM;
    - des premiers moyens (3) reliés audit guide d'onde d'entrée, pour diviser ladite onde incidente en deux ondes d'amplitude égale;
    - une section interférométrique constituée d'une première (4) et d'une seconde (5) branches de guides d'onde d'égale longueur, respectivement reliées à l'une et l'autre sorties desdits premiers moyens diviseurs, pour propager chacune l'une desdites ondes d'amplitude égale;
    - des deuxièmes moyens (6), disposant de deux entrées respectivement reliées aux sorties desdites première et seconde branches interférométriques et de deux sorties respectivement reliées à une première (7) et une seconde (8) branches de guides d'onde de sortie pour répartir également dans ladite première (7) et ladite seconde (8) branches de guides d'onde de sortie lesdites deux ondes d'amplitude égale, lesdits seconds moyens étant constitués d'un coupleur optique du type 3 dB, se composant de deux guides d'onde (9, 10) de longueur égale à la moitié de la longueur de couplage $L_c$; et
    - des troisièmes moyens, associés à ladite section interférométrique, pour établir entre les deux modes TE, respectivement les deux modes TM, qui se propagent dans la première et la seconde branches interférométriques un déphasage $\Delta\rho_{TE}$ = + ou - $\pi/2$, respectivement un déphasage $\Delta\rho_{TM}$ = - ou + $\pi/2$, afin d'assurer la séparation spatiale desdits deux modes de polarisation TE et TM de ladite

EP 0 465 425 B1

onde incidente dans lesdites première et seconde branches de sortie;
**caractérisé en ce que**:
- le dispositif est intégré dans un substrat en verre du type BK7;
- les guides d'ondes (2, 4, 5, 7 à 10) intégrés dans ledit verre sont des guides à forte biréfringence réalisés par échange ionique dans ledit verre; et
- lesdits troisièmes moyens pour assurer la séparation spatiale desdits deux modes de polarisation TE et TM de ladite onde incidente dans lesdites première et seconde branches de sortie consistent à utiliser des première et seconde branches interférométriques qui ont des largeurs différentes, respectivement $l_4$ et $l_5$, lesdites largeurs $l_4$ et $l_5$ étant sélectionnées de manière à causer lesdits déphasages respectifs $\Delta\rho_{TE} = +$ ou $- \pi/2$ et $\Delta\rho_{TM} = -$ ou $+ \pi/2$.

2. Système optique intégré interférométrique à diversité de polarisation (11) caractérisé en ce qu'il comprend les éléments suivants intégrés sur un substrat (12):
- un premier (13) et un second (14) guides d'onde d'entrée dans lesquels sont destinés à être injectés, respectivement, un signal optique d'entrée S et un signal optique de référence LO;
- un coupleur optique (15), indépendant de la polarisation, dont les deux entrées sont reliées, respectivement, auxdits premier et second guides d'onde d'entrée et dont les signaux optiques de sortie ont des puissances optiques égales;
- un premier dispositif optique intégré séparateur de polarisation (1a) selon la revendication 1, disposant d'une entrée reliée à l'une (16) des deux sorties dudit coupleur et d'une première (7a) et d'une seconde (8a) branches de guides d'onde de sortie;
- un second dispositif optique intégré séparateur de polarisation (1b) selon la revendication 1, disposant d'une entrée reliée à l'autre (17) sortie dudit coupleur, et d'une première (7b) et d'une seconde (8b) branches de guides d'onde de sortie;
- un coupleur directionnel (18), indépendant de la polarisation, dont la première et la seconde entrées sont reliées, respectivement, à ladite seconde branche de sortie (8a) dudit premier dispositif optique intégré séparateur de polarisation et à ladite première branche de sortie (7b) dudit second dispositif optique intégré séparateur de polarisation, lequel coupleur est destiné à effectuer un transfert des signaux optiques de la première entrée dans la seconde branche de sortie (18b), respectivement de la seconde entrée dans la première branche de sortie (18a) dudit coupleur directionnel;
- un premier détecteur optique (19) disposé face à ladite première branche de sortie (7a) dudit premier dispositif optique intégré séparateur de polarisation et à ladite première branche de sortie (18a) dudit coupleur directionnel; et
- un second détecteur optique (20) disposé face à ladite seconde branche de sortie (18b) dudit coupleur directionnel et à ladite seconde branche de sortie (8b) dudit second dispositif optique intégré séparateur de polarisation.

3. Système optique intégré interférométrique à diversité de phase et de polarisation (21) caractérisé en ce qu'il comprend les éléments suivants intégrés sur un substrat (22):
- un premier (23) et un second (24) guides d'entrée dans lesquels sont destinés à être injectés, respectivement, un signal optique d'entrée S et un signal optique de référence LO;
- un élément optique interférométrique (25) à deux entrées et N sorties, lequel est indépendant de l'état de polarisation des signaux à ses deux entrées, lesdites entrées étant reliées auxdits premier et second guides d'entrée; et
- N dispositifs optiques intégrés séparateur de polarisation (1) selon la revendication 1, dont l'entrée de chacun d'eux est reliée à l'une des N sorties dudit élément optique interférométrique, et délivrant en sortie, pour chacun des modes de polarisation TE et TM, N signaux de sortie ($P_{1TE} - P_{NTE}$, $P_{1TM} - P_{NTM}$).

4. Système optique intégré interférométrique à diversité de phase et de polarisation (21) selon la revendication 3, caractérisé en ce que N = 3 et lesdits signaux de sortie ($P_{1TE} - P_{3TE}$, $P_{1TM} - P_{3TM}$) pour chacun des modes de polarisation TE et TM, sont trois signaux optiques déphasés de 120°.

5. Système optique intégré interférométrique à diversité de phase et de polarisation (21) selon la revendication 3, caractérisé en ce que N = 4 et lesdits signaux de sortie ($P_{1TE} - P_{4TE}$, $P_{1TM} - P_{4TM}$) pour chacun des modes de polarisation TE et TM, sont quatre signaux optiques en quadrature.

6. Système optique intégré interférométrique à diversité de phase et de polarisation (31) caractérisé en ce qu'il comprend les éléments suivants intégrés sur un substrat (32):

- un premier (33) et un second (34) guides d'entrée dans lesquels sont destinés à être injectés, respectivement, un signal optique d'entrée S et un signal optique de référence LO;
- un premier dispositif optique intégré séparateur de polarisation (1a) selon la revendication 1, dont l'entrée est reliée audit premier guide d'entrée dans lequel est injectée ledit signal optique d'entrée S;
- un second dispositif optique intégré séparateur de polarisation (1b) selon la revendication 1, dont l'entrée est reliée audit' second guide d'entrée dans lequel est injecté ledit signal optique de référence LO;
- un coupleur directionnel (38), indépendant de la polarisation, dont la première et la seconde entrées sont reliées, respectivement, à ladite seconde branche de sortie (8a) dudit premier dispositif optique intégré séparateur de polarisation et à ladite première branche de sortie (7b) dudit second dispositif optique intégré séparateur de polarisation, lequel coupleur est destiné à effectuer un transfert des signaux optiques de la première entrée dans la seconde branche de sortie (38b), respectivement de la seconde entrée dans la première branche de sortie (38a) dudit coupleur directionnel;
- un premier élément optique interférométrique (35a) à deux entrées et N sorties, lequel dépend de l'état de polarisation des signaux à ses deux entrées, lesdites entrées étant reliées, respectivement, à ladite première branche de sortie (7a) dudit premier dispositif optique intégré séparateur de polarisation et à ladite première branche de sortie (38a) dudit coupleur directionnel, et dont les N sorties pour le mode de polarisation TE, sont N signaux optiques ($P_{1TE}$ - $P_{NTE}$); et
- un second élément optique interférométrique (35b) à deux entrées et N sorties, lequel dépend de l'état de polarisation des signaux à ses deux entrées, lesdites entrées étant reliées, respectivement, à ladite seconde branche de sortie (38b) dudit coupleur directionnel et à ladite seconde branche de sortie (8b) dudit second dispositif, et dont les N sorties pour le mode de polarisation TM, sont N signaux optiques ($P_{1TM}$ - $P_{NTM}$).

7. Système optique intégré interférométrique à diversité de phase et de polarisation (31) selon la revendication 6, caractérisé en ce que:
   - N = 3;
   - lesdits signaux de sortie ($P_{1TE}$ - $P_{3TE}$), pour le mode de polarisation TE, dudit premier élément optique interférométrique (35a) sont trois signaux optiques déphasés de 120°; et
   - lesdits signaux de sortie ($P_{1TM}$ - $P_{3TM}$), pour le mode de polarisation TM, dudit second élément optique interférométrique (35b) sont trois signaux optiques déphasés de 120°.

8. Système optique intégré interférométrique à diversité de phase et de polarisation (31) selon la revendication 6, caractérisé en ce que:
   - N = 4;
   - lesdits signaux de sortie ($P_{1TE}$ - $P_{4TE}$), pour le mode de polarisation TE, dudit premier élément optique interférométrique (35a) sont quatre signaux optiques en quadrature; et
   - lesdits signaux de sortie ($P_{1TM}$ - $P_{4TM}$), pour le mode de polarisation TM, dudit second élément optique interférométrique (35b) sont quatre signaux optiques en quadrature.

9. Utilisation du dispositif optique intégré séparateur de polarisation selon la revendication 1 dans un système optique intégré interférométrique à diversité de polarisation.

10. Utilisation du dispositif optique intégré séparateur de polarisation selon la revendication 1 dans un système interférométrique à diversité de phase et de polarisation.

**Patentansprüche**

1. Integrierte optische Polarisationsteilervorrichtung (1), umfassend die folgenden, auf einem Substrat integrierten Elemente:
   - einen Einlaßwellenleiter (2), in den eine auftreffende Welle mit zwei Polarisationsmoden TE und TM zu injizieren ist;
   - erste mit dem Einlaßwellenleiter verbundene Mittel (3) zum Aufteilen der auftreffenden Welle in zwei Wellen gleicher Amplitude;
   - einen interferometrischen Abschnitt, gebildet von einem ersten Zweig (4) und einem zweiten Zweig (5) von Wellenleitern gleicher Länge, verbunden mit einem bzw. einem anderen Auslaß des ersten Teilermittels zum Ausbreiten jeder der genannten amplitudengleichen Wellen;

- zweite Mittel (6) mit zwei Eingängen, verbunden mit den jeweiligen Ausgängen des ersten und des zweiten interferometrischen Zweiges, und mit zwei Ausgängen, verbunden mit einem ersten Zweig (7) bzw. einem zweiten Zweig (8) von Ausgangswellenleitern, um gleichermaßen in den ersten Ausgangswellenleiterzweig (7) und zweiten Ausgangswellenleiterzweig (8) die beiden amplitudengleichen Wellen zu verteilen, welche zweiten Mittel von einem optischen Koppler vom Typ 3 dB gebildet sind, der sich aus zwei Wellenleitern (9, 10) gleicher Länge gleich der Hälfte der Kopplungslänge $L_c$ zusammensetzt; und

- dritte Mittel, zugeordnet dem interferometrischen Abschnitt, zum Etablieren zwischen den beiden Moden TE bzw. beiden Moden TM, die sich in dem ersten bzw. zweiten interferometrischen Zweig ausbreiten, eine Phasenverschiebung $\Delta\rho_{TE}$ = + oder - $\pi/2$ bzw. eine Phasenverschiebung $\Delta\rho_{TM}$ = - oder + $\pi/2$, um die räumliche Trennung der beiden Polarisationsmoden TE und TM der auftreffenden Welle in dem ersten bzw. zweiten Ausgangszweig sicherzustellen;

dadurch gekennzeichnet, daß

- die Vorrichtung in ein Substrat aus Glas vom Typ BK7 integriert ist;
die Wellenleiter (2, 4, 5, 7 bis 10), die in das Glas integriert sind, Leiter mit starker Doppelbrechung sind, realisiert durch Ionenaustausch in dem Glas; und

- die dritten Mittel zum Sicherstellen der räumlichen Trennung der beiden Polarisationsmoden TE und TM der auftreffenden Welle in dem ersten und zweiten Ausgangszweig aus der Verwendung des ersten und zweiten interferometrischen Zweiges bestehen, die unterschiedliche Breite $l_4$ bzw. $l_5$ aufweisen, welche Breiten $l_4$ bzw. $l_5$ derart ausgewählt sind, daß die jeweilige Phasenverschiebung $\Delta\rho_{TE}$ = + oder - $\pi/2$ und $\Delta\rho_{TM}$ = - oder + $\pi/2$ bewirkt wird.

2. Integriertes optisches interferometrisches System mit Polarisationsteilung (11), dadurch gekennzeichnet, daß es die folgenden, auf einem Substrat (12) integrierten Elemente umfaßt:
- einen ersten Einlaßwellenleiter (13) und einen zweiten Einlaßwellenleiter (14), in den ein optisches Eingangssignal S bzw. ein optisches Referenzsignal LO einzuspeisen sind,
- einen optischen, von der Polarisation unabhängigen Koppler (15), dessen beide Eingänge mit dem ersten bzw. zweiten Einlaßwellenleiter verbunden sind und dessen optische Ausgangssignale gleiche optische Leistung aufweisen;
- eine erste integrierte optische Polarisationstrennvorrichtung (1a) nach Anspruch 1 mit einem Eingang, verbunden mit einem (16) der beiden Ausgänge des Kopplers, und mit einem ersten Ausgangswellenleiterzweig (7a) und einem zweiten Ausgangswellenleiterzweig (8a);
- eine zweite integrierte optische Polarisationstrennvorrichtung (1b) nach Anspruch 1 mit einem Eingang, verbunden mit dem anderen (17) Ausgang des Kopplers, und einem ersten Ausgangswellenleiterzweig (7b) und einem zweiten Ausgangswellenleiterzweig (8b);
- einen von der Polarisation unabhängigigen Richtungskoppler (18), dessen erster und zweiter Eingang mit dem zweiten Ausgangszweig (8a) der ersten integrierten optischen Phasentrennvorrichtung bzw. dem ersten Ausgangszweig (7b) der zweiten integrierten optischen Phasentrennvorrichtung verbunden sind, welcher Koppler dazu bestimmt ist, einen Transfer von optischen Signalen von dem ersten Eingang in den zweiten Ausgangszweig (18b) bzw. von dem zweiten Eingang in den ersten Ausgangszweig (18a) des Richtungskopplers zu bewirken;
- einen ersten optischen Detektor (19), der gegenüber dem ersten Ausgangszweig (7a) der ersten integrierten optischen Polarisationstrennvorrichtung und dem ersten Ausgangzweig (18a) des Richtungskopplers angeordnet ist; und
- einen zweiten optischen Detektor (20), der gegenüber dem zweiten Ausgangszweig (18b) des Richtungskopplers und dem zweiten Ausgangszweig (8b) der zweiten integrierten optischen Polarisationstrennvorrichtung angeordnet ist.

3. Integriertes optisches interferometrisches System mit Phasen- und Polarisationsaufspaltung (21), dadurch gekennzeichnet, daß es die folgenden, auf einem Substrat (22) integrierten Elemente umfaßt:
- einen ersten Einlaßwellenleiter (23) und einen zweiten Einlaßwellenleiter (24), in die ein optisches Eingangssignal S bzw. ein optisches Referenzsignal LO einzuspeisen sind;
- ein optisches interferometrisches Element (25) mit zwei Eingängen und N Ausgängen, das unabhängig ist vom Polarisationszustand der Signale an seinen Eingängen, welche Eingänge mit dem ersten bzw. zweiten Eingangsleiter sind; und
- N integrierte optische Polarisationstrennvorrichtungen (1) nach Anspruch 1, bei denen der Eingang von jedem verbunden ist mit einem der N Ausgänge des optischen interferometrischen Elementes, und die am Ausgang für jeden Polarisationsmodus TE und TM N Ausgangssignale ($P_{1TE}$ - $P_{NTE}$, $P_{1TM}$ - $P_{NTM}$) liefern.

4. Integriertes optisches interferometrisches System mit Phasen- und Polarisationsaufspaltung (21) nach Anspruch 3, dadurch gekennzeichnet, daß N = 3 und die Ausgangssignale ($P_{1TE}$ - $P_{3TE}$, $P_{1TM}$ -$P_{3TM}$) für jeden Polarisationsmodus TE und TM drei optische, um 120° phasenverschobene Signale sind.

5. Integriertes optisches interferometrisches Phasen- und Polarisationsaufspaltsystem (21) nach Anspruch 3, dadurch gekennzeichnet, daß N = 4 und daß die Ausgangssiganel ($P_{1TE}$ - $P_{4TE}$, $P_{1TM}$ - $P_{4TM}$) für jeden der Polarisationsmoden TE und TM vier optische, in Quadratur stehende Signale sind.

6. Integriertes optisches interferometrisches Phasen- und Polarisationsaufspaltsystem (31), dadurch gekennzeichnet, daß es die folgenden, auf einem Substrat (32) integrierten Elemente umfaßt:
   - einen ersten Einlaßwellenleiter (33) und einen zweiten Einlaßwellenleiter (34), in den ein optisches Eingangssignal S bzw. ein optisches Referenz LO einzuspeisen sind;
   - eine erste integrierte optische Polarisationstrennvorrichtung (1a) nach Anspruch 1, deren Eingang mit dem ersten Eingangsleiter verbunden ist, in den das optische Eingangssignal S injiziert wird;
   - eine zweite integrierte optische Phasentrennvorrichtung (1b) nach Anspruch 1, deren Eingang mit dem zweiten Eingangsleiter verbunden ist, in den das optische Referenzsignal LO injiziert wird;
   - einen von der Polarisation unabhängigen Richtungskoppler (38), dessen erster und zweiter Eingang mit dem zweiten Ausgangszweig (8a) der ersten integrierten optischen Phasentrennvorrichtung bzw. dem ersten Ausgangszweig (7b) der zweiten integrierten optischen Phasentrennvorrichtung verbunden sind, welcher Koppler dazu bestimmt ist, einen Transfer von optischen Signalen von dem ersten Eingang in den zweiten Ausgangszweig (38b) bzw. von dem zweiten Eingang in den ersten Ausgangszweig (38a) des Richtungskopplers zu bewirken;
   - ein erstes optisches interferometrisches Element (35a) mit zwei Eingängen und N Ausgängen, das abhängt von dem Polarisationszustand von Signalen an seinen beiden Eingängen, wobei die Eingänge mit dem ersten Ausgangszweig (7a) der ersten integrierten optischen Polarisationstrennvorrichtung bzw. mit dem ersten Ausgangszweig (38a) des Richtungskopplers verbunden sind und dessen N Ausgänge für den Polarisationsmodus TE N optische Signale ($P_{1TE}$ - $P_{NTE}$) sind; und
   - ein zweites optisches interferometrisches Element (35b) mit zwei Eingängen und N Ausgängen, das abhängt vom Polarisationszustand von Signalen an seinen beiden Eingängen, welche Eingänge mit dem zweiten Ausgangszweig (38b) des Richtungskopplers bzw. dem zweiten Ausgangszweig (8b) der zweiten Vorrichtung verbunden sind und dessen N Ausgänge für den Polarisationsmodus TM N optische Signale ($P_{1TM}$ - $P_{NTM}$) sind.

7. Integriertes optisches interferometrisches Phasen- und Polarisationsaufspaltsystem (31) nach Anspruch 6, dadurch gekennzeichnet, daß
   - N = 3;
   - die Ausgangssignale ($P_{1TE}$ - $P_{3TE}$) für den Polarisationsmodus TE des ersten optischen interferometrischen Elements (35a) drei optische, um 120° zueinander phasenverschobene Signale sind; und
   - die Ausgangssignale ($P_{1TM}$ - $P_{3TM}$) für den Polarisationsmodus TM des zweiten optischen interferometrischen Elements (35b) drei optische, um 120° zueinander phasenverschobene Signale sind.

8. Integriertes optisches interferometrisches Phasen- und Polarisationsaufspaltsystem (31) nach Anspruch 6, dadurch gekennzeichnet, daß:
   - N = 4;
   - die Ausgangssignale ($P_{1TE}$ - $P_{4TE}$) für den Polarisationsmodus TE des ersten optischen interferometrischen Elementes (35a) vier optische Signale in Quadratur sind; und
   - die Ausgangssignale ($P_{1TM}$ - $P_{4TM}$) für den Polarisationsmodus TM des zweiten optischen interferometrischen Elements (35b) vier optische Signale in Quadratur sind.

9. Verwendung der optischen integrierten Phasentrennvorrichtung nach Anspruch 1 in einem integrierten optischen interferometrischen System mit Polarisationsaufspaltung.

**10.** Verwendung der integrierten optischen Polarisationstrennvorrichtung nach Anspruch 1 in einem interferometrischen System mit Phasen- und Polarisationsaufspaltung.

## Claims

**1.** Integrated optical polarisation splitter device (1) comprising the following elements integrated on a substrate:

- an input waveguide (2) into which an incident wave having two polarisation modes TE and TM is intended to be sent;
- first means (3) connected to the said input waveguide, for splitting the said incident wave into two waves of equal amplitude;
- an interferometry section consisting of first (4) and second (5) waveguide branches of equal length, respectively connected to each of the outputs from the said first splitting means, so that each will propagate one of the said waves of equal amplitude;
- second means (6), having two inputs respectively connected to the outputs of the said first and second interferometry branches and two outputs respectively connected to first (7) and second (8) output waveguide branches also for distributing in the said first (7) and the said second (8) output waveguide branches the said two waves of equal amplitude, the said second means consisting of an optical coupler of the 3 dB type, composed of two waveguides (9, 10) of lengths equal to one half the coupling length $L_c$; and
- third means, associated with the said interferometry section, for establishing between the two modes TE or between the two modes TM, which propagate in the first and second interferometry branches, respectively a phase shift $\Delta\rho_{TE} = \pm \pi/2$ or a phase shift $\Delta\rho_{TM} = \pm \pi/2$, in order to ensure the spatial separation of the said two polarisation modes TE and TM of the said incident waves in the said first and second output branches;
  characterised in that:
- the device is integrated in a type BK7 glass substrate;
- the waveguides (2, 4, 5, 7 to 10) integrated in the said glass are high-birefringence guides produced by ion exchange in the said glass; and
- the said third means for ensuring the spatial separation of the said two polarisation modes TE and TM of the said incident wave in the said first and second output branches consist of using first and second interferometry branches which have different widths, respectively $l_4$ and $l_5$, the said widths $l_4$ and $l_5$ being selected so as to cause the said respective phase shifts $\Delta\rho_{TE} = \pm \pi/2$ and $\Delta\rho_{TM} = \pm \pi/2$.

**2.** Integrated optical interferometry system with polarisation diversity (11), characterised in that it comprises the following elements integrated on a substrate (12):

- first (13) and second (14) input waveguides into which an input optical signal S and a reference optical signal LO are respectively intended to be sent;
- an optical coupler (15), independent of the polarisation, the two inputs of which are connected respectively to the said first and second input waveguides and whose output optical signals have equal optical powers;
- a first integrated optical polarisation splitter device (1a) according to Claim 1, having an input connected to one (16) of the two outputs of the said coupler and first (7a) and second (8a) output waveguide branches;
- a second integrated optical polarisation splitter device (1b) according to Claim 1, having an input connected to the other (17) output of the said coupler, and first (7b) and second (8b) output waveguide branches;
- a directional coupler (18), independent of the polarisation, the first and second inputs of which are connected respectively to the second output branch (8a) of the said first integrated optical polarisation splitter device and to the said first output branch (7b) of the said second integrated optical polarisation splitter device, which coupler is designed to effect a transfer of the optical signals from the first input into the second output branch (18b) and from the second input into the first output branch (18a) of the said directional coupler;
- a first optical detector (19) disposed opposite the said first output branch (7a) of the said first integrated optical polarisation splitter device and opposite the said first output branch (18a) of the said directional coupler; and

- a second optical detector (20) disposed opposite the said second output branch (18b) of the said directional coupler and opposite the said second output branch (18b) of the said second integrated optical polarisation splitter device.

3. Integrated optical interferometry system with phase and polarisation diversity (21), characterised in that it comprises the following elements integrated on a substrate (22):
   - first (23) and second (24) input waveguides into which an input optical signal S and a reference optical signal LO are respectively intended to be sent;
   - an optical interferometry element (25) with two inputs and N outputs, which is independent of the polarisation state of the signals at its two inputs, the said inputs being connected to the said first and second input guides; and
   - N integrated optical polarisation splitter devices (1) according to Claim 1, the input of each of them being connected to one of the N outputs of the said optical interferometry element, and which deliver at their output, for each of the polarisation modes TE and TM, N output signals ($P_{1TE}$ - $P_{NTE}$, $P_{1TM}$ - $P_{NTM}$.

4. Integrated optical interferometry system with phase and polarisation diversity (21) according to Claim 3, characterised in that N = 3 and the said output signals ($P_{1TE}$ - $P_{3TE}$, $P_{1TM}$ - $P_{3TM}$) for each of the polarisation modes TE and TM, are three optical signals offset in phase by 120°.

5. Integrated optical interferometry system with phase and polarisation diversity (21) according to Claim 3, characterised in that N = 4 and the said output signals ($P_{1TE}$ - $P_{4TE}$, $P_{1TM}$ - $P_{4TM}$) for each of the polarisation modes TE and TM, are four optical signals in quadrature.

6. Integrated optical interferometry system with phase and polarisation diversity (31), characterised in that it comprises the following elements integrated on a substrate (32):
   - first (33) and second (34) input waveguides into which respectively an input optical signal S and a reference optical signal LO are intended to be sent;
   - a first integrated optical polarisation splitter device (1a) according to Claim 1, whose input is connected to the said first input guide into which the said input optical signal S is sent;
   - a second integrated optical polarisation splitter device (1b) according to Claim 1, whose input is connected to the said second input guide into which the said reference optical signal LO is sent;
   - a directional coupler (38), independent of the polarisation, whose first and second inputs are connected respectively to the said second output branch (8a) of the said first integrated optical polarisation splitter device and to the said first output branch (7b) of the said second integrated optical polarisation splitter device, which coupler is designed to effect a transfer of the optical signals from the first input into the second output branch (38b) and from the second input into the first output branch (38a) of the said directional coupler;
   - a first optical interferometry element (35a) with two inputs and N outputs, which depends on the state of polarisation of the signals at its two inputs, the said inputs being connected respectively to the said first output branch (7a) of the said first integrated optical polarisation splitter device and to the said first output branch (38a) of the said directional coupler, and whose N outputs for the polarisation mode TE are N optical signals ($P_{1TE}$ - $P_{NTE}$); and
   - a second optical interferometry element (35b) with two inputs and N outputs, which depends on the state of polarisation of the signals at its two inputs, the said inputs being connected respectively to the said second output branch (38b) of the said directional coupler and to the said second output branch (8b) of the said second device, and whose N outputs for the polarisation mode TM are N optical signals ($P_{1TM}$ - $P_{NTM}$).

7. Integrated optical interferometry system with phase and polarisation diversity (31) according to Claim 6, characterised in that:
   - N = 3;
   - the said output signals ($P_{1TE}$ - $P_{3TE}$), for the polarisation mode TE, of the said first optical interferometry element (35a) are three optical signals offset in phase by 120°; and
   - the said output signals ($P_{1TM}$ - $P_{3TM}$), for the polarisation mode TM, of the said second optical interferometry element (35b) are three optical signals offset in phase by 120°.

8. Integrated optical interferometry system with phase and polarisation diversity (31) according to Claim 6, characterised in that:

- N = 4;
- the said output signals ($P_{1TE}$ - $P_{4TE}$), for the polarisation mode TE, of the said first optical interferometry element (35a) are four optical signals in quadrature; and
- the said output signals ($P_{1TM}$ - $P_{4TM}$), for the polarisation mode TM, of the said second optical interferometry element (35b) are four optical signals in quadrature.

9.  Use of the integrated optical polarisation splitter device according to Claim 1 in an integrated optical interferometry system with polarisation diversity.

10. Use of the integrated optical polarisation splitter device according to Claim 1 in an interferometry system with phase and polarisation diversity.

FIG.1

FIG. 2

FIG.3

FIG.4.a

FIG.4.b